# FASCICULE DE BREVET EUROPEEN

(11) **EP 2 354 621 B1**
(45) Date de publication et mention de la délivrance du brevet: **12.09.2012**
(21) Numéro de dépôt: 10305105.8
(22) Date de dépôt: 01.02.2010
(51) Int. Cl.: F16L 59/02, F16L 59/14, B64G 1/40, B64G 1/58, F17C 13/00

(54) **Article d'isolation cryogénique notamment destiné à protéger des réservoirs cryotechniques**
Kryogener Isolationsartikel, insbesondere für den Schutz von kryotechnischen Behältern
Cryogenic insulation item, in particular intended for protecting cryotechnical tanks

(43) Date de publication de la demande: 10.08.2011
(73) Titulaire: Cryospace l'air liquide aerospatiale, 78130 Les Mureaux (FR)
(72) Inventeur: Ruhlmann, Pascal, 75008, PARIS (FR); Damas, Alain, 91700, SAINTE GENEVIEVE DES BOIS (FR)
(74) Mandataire: Ilgart, Jean-Christophe

(56) Documents cités:
- FR-A1- 2 876 438
- US-A1- 2005 040 172
- US-A1- 2005 136 239
- US-A1- 2007 102 055

## Description

### DOMAINE TECHNIQUE

L'invention concerne en premier lieu un article d'isolation cryogénique destiné à protéger notamment des réservoirs soumis à des températures cryogéniques, contenant des ergols qui doivent être maintenus en phase liquide en minimisant les pertes thermiques. Elle s'étend aux réservoirs d'ergol revêtus de cet article et aux lanceurs spatiaux équipés de tels réservoirs. Dans l'ensemble du texte, l'expression « températures cryogéniques » doit être comprise comme désignant des températures très basses, telles que celles de l'oxygène liquide (90 K) et de l'hydrogène liquide (20 K).

### ÉTAT DE LA TECHNIQUE ANTÉRIEURE

Lorsqu'on désire assurer la protection d'un réservoir cryotechnique notamment destiné à équiper un lanceur, il est indispensable de le revêtir d'un matériau thermiquement isolant afin de limiter les entrées thermiques pour préserver de l'évaporation les ergols liquides qu'il contient. Il est fréquent que ce matériau thermiquement isolant, qui est soit collé, soit projeté directement sur le réservoir cryotechnique, soit ou en mousse rigide à cellules fermées en polychlorure de vinyle, polyuréthanne chargé ou non de verre, polyisocyanurate ou résine phénolique. De tels matériaux, utilisés généralement en épaisseur d'environ 20 à 25 mm, donnent entière satisfaction dans le cas d'un environnement à pression ambiante (environ 1 bar). La demanderesse a déjà décrit de telles isolations thermiques de réservoirs cryotechniques dans ses demandes de brevet FR-A-2 876 438 et EP-A-1 878 663.

Or les isolations thermiques destinées à protéger les réservoirs cryotechniques ne sont pas optimisées pour assurer les contraintes mécaniques et thermiques durant toutes les phases d'utilisation (attente au sol, vol ascensionnel, phase balistique). Il est des cas où il serait intéressant et fort utile d'avoir la possibilité de disposer d'isolations bien meilleures quant à la performance thermique en condition de vide partiel ou secondaire (vol ascensionnel, phase balistique) tout en assurant des marges de résistance mécanique plus confortables, et sans accroître excessivement le poids de l'isolation. Les isolations selon la technique antérieure, dont la performance est indépendante de la pression gazeuse environnante, ne permettent pas de profiter du vide environnant caractérisant certaines phases de vol, et ne remplissent pas de manière optimale leur fonction. Elles n'empêchent pas d'importantes pertes d'ergols par évaporation, qui ne peuvent plus servir à la propulsion et deviennent des charges inutiles.

### EXPOSÉ DE L'INVENTION

La présente invention répond à ces besoins et fournit un moyen de protection thermique capable de stabiliser la température à la face froide délimitant la zone à protéger, et ceci de façon optimale durant toutes les phases de vol (attente au sol, vol ascensionnel, phase balistique), tout en évitant d'inacceptables surcroîts de masse, pénalisants pour le lanceur en termes de charge utile.

Elle assure des performances fonctionnelles plus importantes. Plus spécialement dédiée au domaine aéronautique et spatial, elle peut également être employée dans tout autre secteur industriel dans lequel on utilise des protections thermiques.

Elle va être décrite dans le cas de l'isolation d'un réservoir cryotechnique d'un engin spatial, qui est une structure métallique à paroi mince à la température de l'ergol qu'il contient, par rapport à la température ambiante.

L'article d'isolation de l'invention est fondé sur la combinaison d'un substrat d'isolation en un matériau aux cellules fermées, déposé (selon une technique ou une autre) sur la structure à isoler, fréquemment la paroi métallique d'un réservoir, et d'une autre couche déposée sur le substrat et qui est en un matériau isolant à cellules ouvertes. Cette combinaison a l'avantage d'offrir un gain en performance thermique considérable avec une densité globale normalement plus faible, l'ouverture des cellules sur l'extérieur garantissant le drainage du gaz inclus à la sortie de l'atmosphère et donc une conductivité thermique beaucoup plus réduite, et très inférieure à celle de la couche de substrat aux cellules fermées, qui restent occupées par le gaz.

US-A-2005/0 136 239 décrit toutefois une telle combinaison de couches.

L'article d'isolation de l'invention comprend encore un traitement sous forme d'imprégnation conférant à la couche de matériau isolant aux cellules ouvertes une étanchéité à l'eau liquide tout en conservant en perméabilité aux gaz. Celle-ci est alors protégée de l'humidité ambiante pendant le séjour au sol, qui pourrait l'endommager par pompage cryogénique par la suite et être pénalisante pour le lanceur en termes de charge utile, sans empêcher de la vider du gaz qu'elle contient sans difficulté au cours du vol ascensionnel.

Conformément à l'invention, le gain en performance thermique est obtenu par la très faible conductivité thermique des mousses à cellules ouvertes dans le vide. Ainsi, par rapport aux isolations actuelles, le gain en conductivité peut atteindre 1000% pour une pression environnante de 10⁻⁵ mbar. Ainsi, dans le cadre d'un engin spatial, les gains en performance thermique durant les phases de vol ascensionnel et balistique sont très significatifs. La masse d'ergol évaporé, perdue pour la propulsion, est ainsi considérablement réduite durant ces phases. Cela se traduit directement par un gain conséquent en charge utile.

Durant l'attente au sol des réservoirs cryotechniques, il est impératif d'éviter la condensation de l'air et la solidification de l'eau au sein de la protection thermique. Dans le cas d'un réservoir à hydrogène liquide, la paroi de ce dernier est à une température de 20 K, ce qui est inférieur à la température de condensation de l'air. Le rôle de la première couche en mousse à cellules fermées, par sa propriété d'étanchéité aux gaz, est d'empêcher l'air d'entrer en contact avec la paroi froide. Une faible épaisseur de cette mousse suffit à assurer à sa surface une température suffisamment élevée pour éviter la condensation de l'air à l'interface avec la seconde couche en mousse à cellules ouvertes, non étanche à l'air et à l'eau. D'autre part, le traitement étanchant permet d'empêcher l'infiltration d'eau liquide à l'intérieur de la mousse à cellules ouvertes. Ce traitement doit par contre préserver la perméabilité à l'air de la mousse à cellules ouvertes, afin de permettre au gaz contenu dans la mousse de s'échapper lorsque la pression externe tend vers le vide, afin d'assurer la performance thermique de l'isolation. Il s'agit donc d'un traitement étanchant rendant la mousse imperméable et respirante.

Par ailleurs, la masse du traitement étanchant, du fait de sa faible épaisseur, est négligeable par rapport à celle des mousses. Ainsi, la moyenne de la densité des matériaux formant l'isolation thermique selon l'invention est moindre que les isolations actuellement utilisées, tout en assurant des gains thermiques considérables.

### EXPOSÉ DÉTAILLÉ DE MODES DE RÉALISATION PARTICULIERS

A titre d'exemple illustratif et non limitatif, on a réalisé une isolation conforme à l'invention pouvant être appliquée sur un réservoir cryotechnique destiné à équiper l'étage supérieur d'un lanceur de type Ariane 5.

Dans cet exemple, l'article d'isolation comprend d'abord un substrat déposé sur la paroi métallique du réservoir. Il s'agit d'une première couche d'isolation en polyetherimide connue sous la dénomination R82 disponible auprès de la Société AIREX. Cette mousse à cellules fermées est caractérisée par une masse volumique de 60 kg/m³, et une conductivité thermique de 0,036 W/m.K à une température de 293 K (quelle que soit la pression externe).

L'article d'isolation comprend ensuite une deuxième couche d'isolation en polyimide et connue sous la domination SOLIMIDE disponible auprès de la Société INSPEC FOAMS. Cette mousse à cellules ouvertes est caractérisée par une masse volumique de 32 Kg/m³, et une conductivité thermique de 0,032 W/m.K à une température de 297 K et pour une pression de 1 bar, et de 0,003 M/m.K pour une pression de 10⁻⁵ mbar.

La mise en place d'un adhésif ou d'attaches auto-agrippantes entre les deux matériaux isolants permet d'assembler les deux couches de mousses.

L'article d'isolation comprend enfin un traitement étanchant sur la couche de matériau aux cellules ouvertes. Il peut consister en une imprégnation par du polymère de fluorocarbone dont les propriétés de tension superficielle empêchent l'humidité à entrer dans les cellules du matériau, tout en préservant sa perméabilité aux gaz.

Afin de mieux comprendre tout l'intérêt que présente cet exemple illustratif, on va maintenant le comparer à l'isolation thermique utilisée actuellement sur la partie cylindrique du réservoir cryotechnique hydrogène de l'étage supérieur du lanceur Ariane 5 (géométrie ESC-B). Cette protection thermique est constituée de la mousse CRYOSOF, qu'on a décrite à propos de l'invention, et réalisée en couche avec une épaisseur de 40 mm.

Les deux phases de vol dimensionnantes pour ce type d'isolation sont le vol ascensionnel et la phase balistique. Les critères de comparaison seront le flux thermique moyen entrant dans le réservoir durant le vol ascensionnel et la masse d'ergol évaporé (et donc inconsommable) durant la phase balistique. L'étude se limite à la partie cylindrique du réservoir.

Dans l'exemple présenté, on choisit pour illustrer l'invention une épaisseur de 30 mm de SOLIMIDE pour la seconde couche d'isolant. Une première couche de 6 mm de R82 suffit alors pour assurer les bonnes conditions de températures à l'interface entre les deux mousses pendant la phase d'attente au sol. Un rapport de 1/5 ou même moins entre la couche de substrat et la couche aux cellules ouvertes suffit donc, la couche de substrat étant irremplaçable pour isoler la paroi du réservoir de l'air mais nullement optimisée à l'isolation thermique, comme on l'a mentionné. On obtient alors les comparaisons qui sont données dans le tableau I suivant :

**Tableau I**

| **Configuration** | **Masse Surfacique (kg/m²)** | **Flux moyen entrant Vol ascensionnel (W/m²)** | **Masse d'ergol évaporé phase balistique (kg)** |
|---|---|---|---|
| Monocouche CRYOSOF (art antérieur) | 2,4 | 193,5 | 311 |
| CRYOSOF/SOLIMIDE (invention) | 1,33 | 56,6 | 81 |

Pour l'isolation à cellules ouvertes, qui illustre l'invention, la faible valeur de masse surfacique tient compte du surplus de colle nécessaire à l'interface inter-couches. La masse de la colle nécessaire utilisée lors de sa confection est comprise entre 0,08 et 0,1 kg/m². De préférence, elle est avantageusement un polyuréthanne constitué d'un polyol et d'un isocyanate, choisi de façon à conserver ses propriétés jusqu'à une température cryogénique.

Le tableau fait ressortir les gains significatifs apportés par l'invention. Avec une protection thermique dont la masse est diminuée de 45%, on réduit les flux en vol ascensionnel de plus de 70% et la masse d'ergol évaporé durant la phase balistique de 74%.

Le gain en terme de charge utile, pour un réservoir hydrogène d'étage supérieur dont la surface cylindrique isolée est d'environ 45 m², monté sur un lanceur de type Ariane 5, est de plusieurs centaines de kilogrammes (selon la mission et le type de réservoir).

## Revendications

1. Article d'isolation pour isolation cryogénique, comprenant au moins un substrat d'isolation à déposer sur une structure à isoler, et, sur ledit substrat d'isolation, une couche d'un matériau isolant à cellules ouvertes, **caractérisé en ce qu'**il comprend un traitement d'imprégnation assurant l'étanchéité aux liquides mais la perméabilité aux gaz de la couche du matériau isolant aux cellules ouvertes.

2. Article d'isolation selon la revendication 1, **caractérisé en ce que** le substrat d'isolation comprend une couche d'un matériau à cellules fermées.

3. Article d'isolation selon l'une quelconque des revendications 1 ou 2, **caractérisé en ce que** le substrat est une mousse de polyetherimide et le matériau isolant aux cellules ouvertes est une mousse de polyimide.

4. Article d'isolation selon la revendication 3, **caractérisé en ce que** le substrat et la couche du matériau isolant aux cellules ouvertes ont des épaisseurs dans un rapport au plus égal à 1/5.

5. Réservoir d'ergol, **caractérisé en ce qu'**il est isolé par un article d'isolation selon l'une quelconque des revendications précédentes.

6. Lanceur spatial, **caractérisé en ce qu'**il comprend un réservoir d'ergol selon la revendication 5.

## Claims

1. Insulation item for cryogenic insulation, comprising at least one insulation substrate to be deposited on a structure to be insulated, and a layer of an insulation material with open cells on said insulation substrate, **characterised in that** it comprises an impregnation treatment making the layer of insulation material with open cells impermeable to liquids but permeable to gases.

2. Insulation item according to claim 1, **characterised in that** the insulation substrate comprises a layer of material with closed cells.

3. Insulation item according to claim 1 or 2, **characterised in that** the substrate is a polyetherimide foam and the insulation material with open cells is a polyimide foam.

4. insulation item according to claim 3, **characterised in that** the ratio of the thicknesses of the substrate and the layer of insulation material with open cells is not more than 1:5.

5. Liquid propellant tank, **characterised in that** it is insulated by an insulation item according to any one of the previous claims.

6. Space launcher, **characterised in that** it comprises a liquid propellant tank according to claim 5.

## Patentansprüche

1. Isolationsartikel zur kryogenen Isolierung, umfassend wenigstens ein Isoliersubstrat zum Aufbringen auf eine zu isolierende Struktur und auf diesem Isoliersubstrat eine Schicht aus einem offenzelligen Isoliermaterial, **dadurch gekennzeichnet, dass** er eine Imprägnierbehandlung umfasst, die die Flüssigkeitsdichtigkeit aber auch die Gasdurchlässigkeit der Schicht aus offenzelligem Isoliermaterial sicherstellt.

2. Isolationsartikel gemäß Anspruch 1, **dadurch gekennzeichnet, dass** das Isoliersubstrat eine Schicht aus einem geschlossenzelligen Material umfasst.

3. Isolierartikel gemäß einem der Ansprüche 1 oder 2, **dadurch gekennzeichnet, dass** das Substrat ein Polyetherimidschaum ist und das offenzellige Isoliermaterial ein Polyimidschaum ist.

4. Isolationsartikel gemäß Anspruch 3, **dadurch gekennzeichnet, dass** das Substrat und die Schicht aus dem offenzelligen Isoliermaterial Dicken im Verhältnis von höchstens 1/5 aufweisen.

5. Treibstoffbehälter, **dadurch gekennzeichnet, dass** er durch einen Isolationsartikel gemäß einem der vorangehenden Ansprüche isoliert ist.

6. Trägerrakete **dadurch gekennzeichnet, dass** sie einen Treibstoffbehälter gemäß Anspruch 5 umfasst.
